# EUROPEAN PATENT SPECIFICATION

(11) **EP 4 167 549 B1**
(45) Date of publication and mention of the grant of the patent: **06.08.2025**
(21) Application number: 21837286.0
(22) Date of filing: 01.07.2021
(51) Int. Cl.: H04M 1/02, H04M 1/03, G06F 1/16

(54) **ELECTRONIC DEVICE**
ELEKTRONISCHE VORRICHTUNG
DISPOSITIF ÉLECTRONIQUE

(30) Priority: 07.07.2020 CN 202010646345
(43) Date of publication of application: 19.04.2023
(73) Proprietor: Vivo Mobile Communication Co., Ltd., Dongguan, Guangdong 523863 (CN)
(72) Inventor: YU, Shuitong, Dongguan, Guangdong 523863 (CN)
(74) Representative: Murgitroyd & Company
(86) International application number: PCT/CN2021/104012
(87) International publication number: WO 2022/007703

(56) References cited:
- CN-A- 101 742 376
- CN-A- 101 895 802
- CN-A- 107 770 698
- CN-A- 109 819 074
- CN-A- 111 770 221
- CN-U- 201 657 237
- KR-A- 20200 037 693
- US-A1- 2018 109 871

## Description

### TECHNICAL FIELD

This application relates to the field of communication device technologies, and specifically, to an electronic device.

### BACKGROUND

To obtain a better sound quality experience, a user has an increasingly high requirement on the sound quality of a speaker module of an electronic device. In a process of implementing this application, the inventor finds that the existing technologies at least have the following problems: Existing electronic devices have limited space for the speaker module, which makes it difficult to improve an audio playback effect that the speaker module of the electronic device can achieve in the limited space, resulting in poor user experience.

Document US 2018/109871 A1 discloses an electronic device having a foldable housing. The foldable housing includes a series of connected hinge members 1151. Each hinge member 1151 includes a cover 1151e, a connector 1151a connecting the hinge member 1151 to the housing 1110, a cover connector 1151b connecting the cover 1151e of the hinge member 1151 to a cover member 1151e of another hinge member 1151, and a sound leakage preventing member 1151c for preventing the sound introduced into an inside space of the hinge member 1151 from being leaked.

### SUMMARY

According to a first aspect, an embodiment of this application provides an electronic device, which is defined in claim 1.

Further advantageous features are defined in the dependent claims.

### BRIEF DESCRIPTION OF THE DRAWINGS

FIG. 1 is a schematic structural diagram of an electronic device when a first main body and a second main body move relative to each other to an unfolded state according to an embodiment of this application.
FIG. 2 is a three-dimensional cross-sectional view of a partial structure of an electronic device when a first main body and a second main body move relative to each other to an unfolded state according to an embodiment of this application.
FIG. 3 is a two-dimensional cross-sectional view of a partial structure of an electronic device when a first main body and a second main body move relative to each other to an unfolded state according to an embodiment of this application.
FIG. 4 is a three-dimensional cross-sectional view of an electronic device when a first main body and a second main body move relative to each other to a folded state according to an embodiment of this application.
FIG. 5 is a two-dimensional cross-sectional view of a partial structure of an electronic device when a first main body and a second main body move relative to each other to a folded state according to an embodiment of this application.
FIG. 6 is a schematic structural diagram of a connecting tube in an electronic device according to an embodiment of this application.
FIG. 7 is a schematic structural diagram of a double-shaft hinge structure in an electronic device according to an embodiment of this application.

### DETAILED DESCRIPTION

The following clearly and completely describes the technical solutions in the embodiments of this application with reference to the accompanying drawings in the embodiments of this application. Apparently, the described embodiments are some embodiments of this application rather than all of the embodiments.

In the specification and claims of this application, the terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

An electronic device provided in the embodiments of this application is described below through specific embodiments and application scenarios thereof with reference to the accompanying drawings.

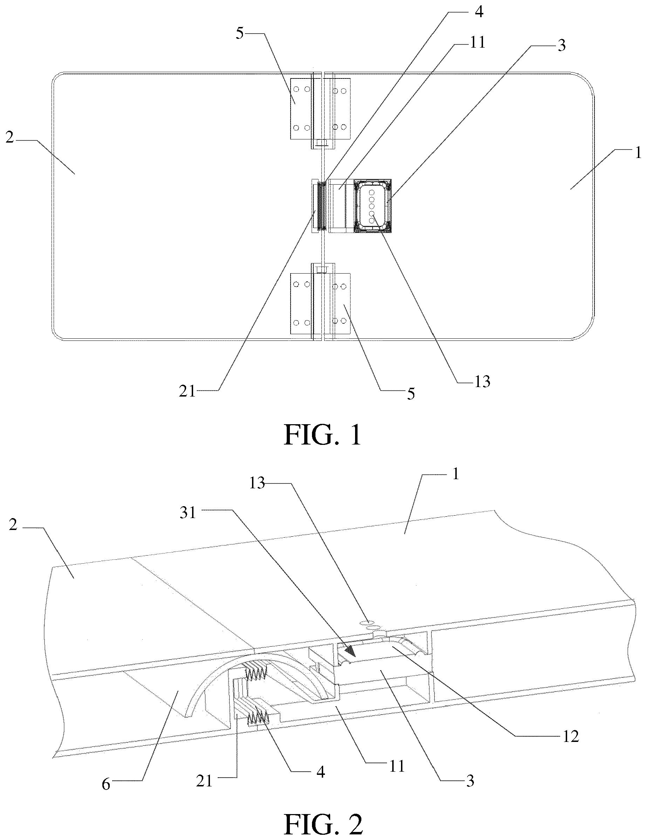

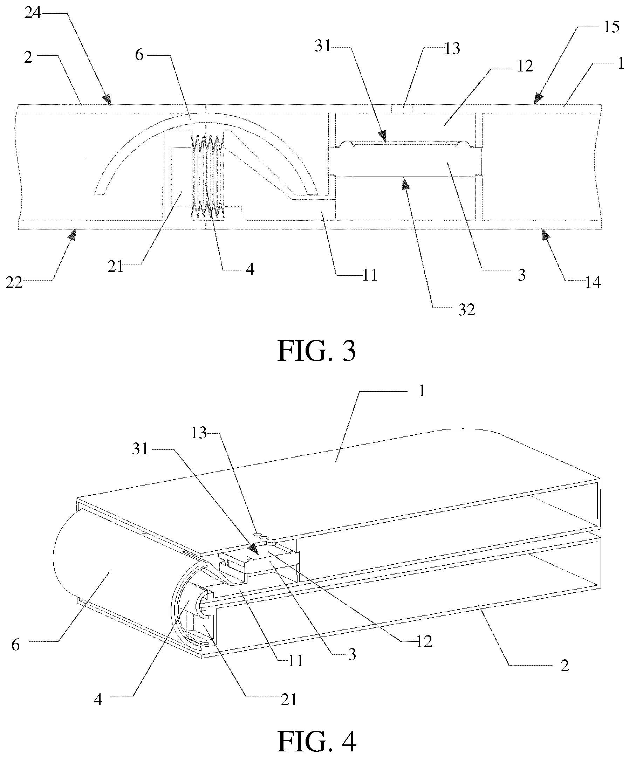

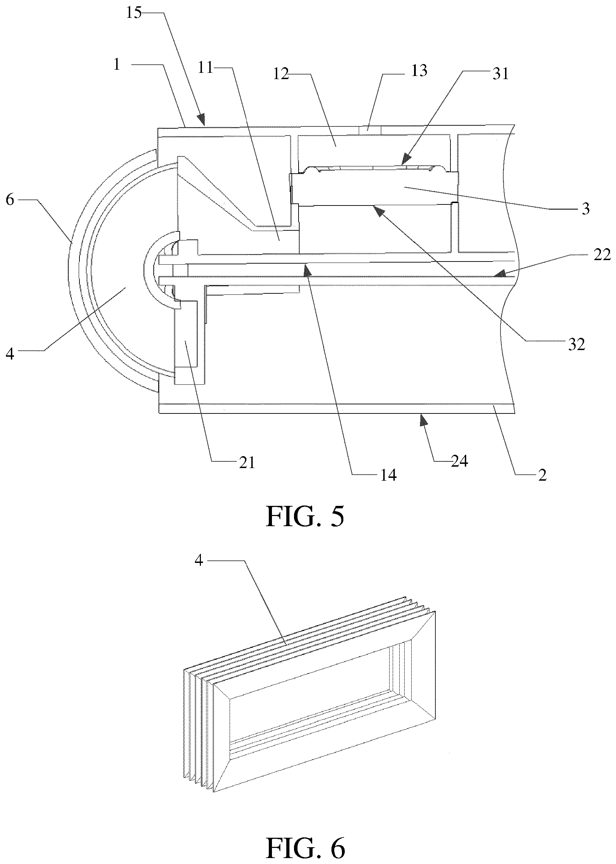

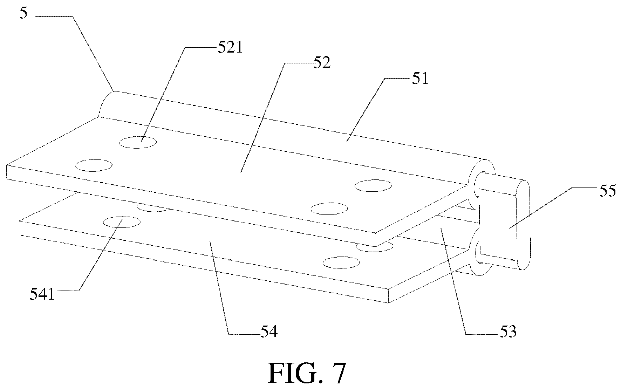

As shown in FIG. 1 to FIG. 7, the embodiments of this application provide an electronic device, including: a first main body 1, a second main body 2, a speaker module 3 and a connecting tube 4, where
the first main body 1 and the second main body 2 are rotatable relative to each other to a folded state or an unfolded state;
the first main body 1 is provided with a first cavity 11 and the speaker module 3, and the first cavity 11 is in communication with the speaker module 3;
the second main body 2 is provided with a second cavity 21; and
the connecting tube 4 is disposed at a rotational joint between the first main body 1 and the second main body 2, two ends of the connecting tube 4 are respectively in communication with the first cavity 11 and the second cavity 21, the first cavity 11, the connecting tube 4, and the second cavity 21 together form a rear sound cavity of the speaker module 3, and the connecting tube 4 is stretchable, where
in a case that the first main body 1 and the second main body 2 rotate relative to each other to the folded state, the connecting tube 4 is in a stretched state; and in a case that the first main body 1 and the second main body 2 rotate relative to each other to the unfolded state, the connecting tube 4 is in a compressed state.

In the embodiments of this application, the electronic device may include, but is not limited to: a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device).

The first main body 1 may be a housing, or may be a display module, or may further be a composite structure of a housing and a display module; and The second main body 2 may be a housing, or may be a display module, or may further be a composite structure of a housing and a display module. Specifically, the first main body 1 and the second main body 2 may be rotationally connected by a rotating shaft, or may be rotationally connected by a hinge.

The connecting tube 4 may be various types of connecting tubes such as a plastic tube, a silicone tube, a rubber tube, or the like. When the connecting tube 4 is in the stretched state, the volume of the connecting tube 4 is increased, thereby increasing the volume of a rear sound cavity of the speaker module 3; and when the connecting tube 4 is in the compressed state, the volume of the connecting tube 4 is reduced, thereby reducing the volume of the rear sound cavity of the speaker module 3.

Specifically, that the two ends of the connecting tube 4 are respectively in communication with the first cavity 11 and the second cavity 21 may be that the two ends of the connecting tube 4 are respectively connected to and in communication with the first cavity 11 and the second cavity 21. In a practical application, the two ends of the connecting tube 4 can be respectively sealed and connected to the first cavity 11 and the second cavity 21 through glue or a double-sided tape.

The first main body 1 may further be provided with a front sound cavity 12 and a sound outlet hole 13. The sound outlet hole 13 may be located on a surface of the first main body 1, and the front sound cavity 12 may be located between a sound outlet surface 31 of the speaker module 3 and the sound outlet hole 13. The front sound cavity 12 may be respectively in communication with the sound outlet surface 31 and the sound outlet hole 13, so that the sound produced from the sound outlet surface 31 is transmitted to the outside through the sound outlet hole 13. The sound outlet surface 31 of the speaker module 3 may refer to a surface of the speaker module 3 for producing a sound.

In the embodiments of this application, since the first cavity, the connecting tube, and the second cavity together form a rear sound cavity of the speaker module, and the connecting tube is stretchable, in a case that the first main body and the second main body rotate relative to each other to the folded state, the connecting tube is in the stretched state, and in a case that the first main body and the second main body rotate relative to each other to the unfolded state, the connecting tube is in the compressed state, so that the volume of the connecting tube can be changed with the change of a relative position of the first main body and the second main body, and then the volume of the rear sound cavity of the speaker module can be changed with the change of the relative position of the first main body and the second main body. When the volume of the rear sound cavity is changed, the sound quality of the speaker module may also be changed. Therefore, in the embodiments of this application, the sound quality of the speaker module can be changed with the change of the relative position of the first main body and the second main body, thereby further improving the audio playback effect of the speaker module of the electronic device.

Optionally, the first cavity 11 extends from the speaker module 3 to the connecting tube 4.

In the embodiments of this application, specifically, that the first cavity 11 extends from the speaker module 3 to the connecting tube 4 may be that the first cavity 11 extends from a non-sound outlet surface 32 of the speaker module 3 to the connecting tube 4. The non-sound outlet surface 32 of the speaker module 3 may refer to other surfaces of the speaker module 3 other than the sound outlet surface 31.

Optionally, the first main body 1 includes a first side close to the rotational joint, and the first cavity 11 is located on the first side; and
the second main body 2 includes a second side close to the rotational joint, and the second cavity 21 is located on the second side.

Since the first main body includes the first side close to the rotational joint, the first cavity is located on the first side, and the second main body includes the second side close to the rotational joint, and the second cavity is located on the second side, the communication between the connecting tube and the first cavity and the second cavity can be more convenient.

Optionally, in a case that the first main body 1 and the second main body 2 rotate relative to each other to the folded state, the first main body 1 includes a first surface 14 facing the second main body 2 and a second surface 15 facing away from the second main body 2, the second main body 2 includes a third surface 22 facing the first main body 1 and a fourth surface 24 facing away from the first main body 1, and the first surface 14 is opposite to the third surface 22;
the first cavity 11 is located between the first surface 14 and the second surface 15, the first cavity 11 is provided close to the first surface 14; and
the second cavity 21 is located between the third surface 22 and the fourth surface 24, the second cavity 21 is provided close to the third surface 22.

Since the first cavity is located between the first surface and the second surface, the first cavity is provided close to the first surface, and the second cavity is located between the third surface and the fourth surface, the second cavity is provided close to the third surface, the connection between the connecting tube and the first cavity and the second cavity is more convenient and the installation of the connecting tube is more convenient. In addition, a stretching process and a contracting process of the connecting tube can also be smoother.

Optionally, when the connecting tube 4 is in the stretched state, the connecting tube 4 is an arc-shaped tube; and when the connecting tube 4 is in the compressed state, the connecting tube 4 is a straight tube.

Since when the connecting tube is in the stretched state, the connecting tube is an arc-shaped tube; and when the connecting tube is in the compressed state, the connecting tube is a straight tube, the stretching process and the contracting process of the connecting tube can be smoother.

Optionally, a communication portion between the connecting tube 4 and the first cavity 11 is located in the first main body 1.

Since the communication portion between the connecting tube and the first cavity is located in the first main body, the communication portion between the connecting tube and the first cavity can be better protected, and the communication portion between the connecting tube and the first cavity can be prevented from being damaged by a foreign object.

Optionally, a communication portion between the connecting tube 4 and the second cavity 21 is located in the second main body 2.

Since the communication portion between the connecting tube and the second cavity is located in the second main body, the communication portion between the connecting tube and the second cavity can be better protected, and the communication portion between the connecting tube and the second cavity can be prevented from being damaged by a foreign object.

Optionally, the electronic device further includes a double-shaft hinge structure 5, where
the first main body 1 and the second main body 2 are connected by the double-shaft hinge structure 5.

Since the first main body and the second main body are connected by the double-shaft hinge structure, the connection between the first main body and the second main body can be more convenient, and a relative movement between the first main body and the second main body can be more convenient and smoother.

Optionally, the double-shaft hinge structure 5 includes a first rotating shaft 51, a first connection portion 52, a second rotating shaft 53, a second connection portion 54, and a third connection portion 55, where
the first rotating shaft 51 and the second rotating shaft 53 are spaced apart from each other and both are located on a first side of the third connection portion 55;
two opposite ends of the third connection portion 55 are respectively connected to the first rotating shaft 51 and the second rotating shaft 53;
the first connection portion 52 is respectively connected to the first rotating shaft 51 and the first main body 1; and
the second connection portion 54 is respectively connected to the second rotating shaft 53 and the second main body 2.

In the embodiments of this application, the first connection portion 52 may be provided with a through hole 521 for connecting with the first main body 1. The second connection portion 54 may be provided with a through hole 541 for connecting with the second main body 2.

Since the first rotating shaft and the second rotating shaft are spaced apart from each other and both are located on the first side of the third connection portion, two opposite ends of the third connection portion are respectively connected to the first rotating shaft and the second rotating shaft, the first connection portion is respectively connected to the first rotating shaft and the first main body; and the second connection portion is respectively connected to the second rotating shaft and the second main body, the first main body and the second main body can rotate independently of each other, so that a relative movement between the first main body and the second main body can be more convenient and smoother.

Optionally, there are two double-shaft hinge structures 5, where
the first main body 1 and the second main body 2 are connected by the two double-shaft hinge structures 5, the two double-shaft hinge structures 5 are spaced apart from each other, and the connecting tube 4 is located between the two double-shaft hinge structures 5.

In the embodiments of this application, the two double-shaft hinge structures 5 may be respectively connected to the first main body 1 and the second main body 2.

Since the first main body and the second main body are connected by the two double-shaft hinge structures, the reliability of the connection between the first main body and the second main body is better. In addition, since the connecting tube is located between the two double-shaft hinge structures, the installation of the connecting tube can also be facilitated.

The electronic device further includes a cover plate 6, where the cover plate 6 is disposed at the rotational joint, the cover plate 6, the first main body 1, and the second main body 2 enclose to form a third cavity, and the connecting tube 4 is located in the third cavity;
in a case that the first main body 1 and the second main body 2 rotate relative to each other to the folded state, at least a portion of the cover plate 6 is exposed; and in a case that the first main body 1 and the second main body 2 rotate relative to each other to the unfolded state, the first main body 1 and the second main body 2 jointly cover the cover plate.

In the embodiments of this application, the cover plate 6 being at least partially exposed may mean that at least a portion of the cover plate 6 is exposed outside the first main body 1 and the second main body 2. In a width direction of the electronic device, the cover plate 6, the first main body 1, and the second main body 2 may or may not be aligned with each other. The double-shaft hinge structure 5 may further be located in the third cavity.

Since the electronic device further includes a cover plate, in a case that the first main body and the second main body rotate relative to each other to the folded state, at least a portion of the cover plate is exposed; and in a case that the first main body and the second main body rotate relative to each other to the unfolded state, the first main body and the second main body jointly cover the cover plate. Therefore, when the first main body and the second main body are folded, the cover plate can be exposed to protect an internal structure of the electronic device, for example, a connecting tube, or the like, and when the first main body and the second main body are unfolded, the cover plate can be hidden from the first main body and the second main body to reduce the effect of the cover plate on the normal use of the first main body and the second main body.

In the embodiments of this application, the rear sound cavity of the speaker module of the electronic device is divided into two parts, which are respectively located in the first main body and the second main body, and are sealed and connected by a stretchable connecting tube, making full use of the change of folded space when a foldable electronic device is in different forms, which can increase the volume of the rear sound cavity of the speaker module without encroaching on internal layout space of the electronic device. That is, when the electronic device is folded, the connecting tube is stretched, and the volume of the rear sound cavity of the speaker module is increased, and when the electronic device is unfolded, the connecting tube is compressed, and the volume of the rear sound cavity of the speaker module is reduced, so that the sound quality of the speaker module can be changed with the change of the relative position of the first main body and the second main body, further improving the audio playback effect of the speaker module of the electronic device.

It should be noted that, the terms "include", "comprise", or any other variation thereof in this specification is intended to cover a non-exclusive inclusion, making a process, method, article or apparatus including a series of elements include not only those elements, but also other elements not expressly listed, or further elements inherent to such process, method, article or apparatus. Without more limitations, elements defined by the sentence "including one" does not exclude that there are still other same elements in the processes, methods, objects, or apparatuses.

The embodiments of this application are described above with reference to the accompanying drawings. However, this application is not limited to the foregoing specific implementations. The foregoing specific implementations are illustrative instead of limitative.

## Claims

1. An electronic device, comprising: a first main body (1), a second main body (2), a speaker module (3), and a connecting tube (4), where
the first main body (1) and the second main body (2) are rotatable relative to each other to a folded state or an unfolded state;
the first main body (1) is provided with a first cavity (11) and the speaker module (3), and the first cavity (11) is in communication with the speaker module (3);
the second main body (2) is provided with a second cavity (21); and
the connecting tube (4) is disposed at a rotational joint between the first main body (1) and the second main body (2), two ends of the connecting tube (4) are respectively in communication with the first cavity (11) and the second cavity (21), the first cavity (11), the connecting tube (4), and the second cavity (21) together form a rear sound cavity of the speaker module (3), and the connecting tube (4) is stretchable, wherein
in a case that the first main body (1) and the second main body (2) rotate relative to each other to the folded state, the connecting tube (4) is in a stretched state; and in a case that the first main body (1) and the second main body (2) rotate relative to each other to the unfolded state, the connecting tube (4) is in a compressed state;
**characterised in that**
the electronic device further comprises a cover plate (6), wherein the cover plate (6) is disposed at the rotational joint, the cover plate (6), the first main body (1), and the second main body (2) enclose to form a third cavity, and the connecting tube (4) is located in the third cavity;
in a case that the first main body (1) and the second main body (2) rotate relative to each other to the folded state, at least a portion of the cover plate (6) is exposed; and
in a case that the first main body (1) and the second main body (2) rotate relative to each other to the unfolded state, the first main body (1) and the second main body (2) jointly cover the cover plate (6), and the cover plate (6) is entirely hidden in a cavity formed by the first main body (1) and the second main body (2).

2. The electronic device according to claim 1, wherein the first main body (1) comprises a first side close to the rotational joint, and the first cavity (11) is located on the first side; and
the second main body (2) comprises a second side close to the rotational joint, and the second cavity (21) is located on the second side.

3. The electronic device according to claim 1, wherein in a case that the first main body (1) and the second main body (2) rotate relative to each other to the folded state, the first main body (1) comprises a first surface (14) facing the second main body (2) and a second surface (15) facing away from the second main body (2), the second main body (2) comprises a third surface (22) facing the first main body (1) and a fourth surface (24) facing away from the first main body (1), and the first surface (14) is opposite to the third surface (22);
the first cavity (11) is located between the first surface (14) and the second surface (15), the first cavity (11) is provided close to the first surface (14); and
the second cavity (21) is located between the third surface (22) and the fourth surface (24), the second cavity (21) is provided close to the third surface (22).

4. The electronic device according to claim 1, wherein in a case that the connecting tube (4) is in the stretched state, the connecting tube (4) is an arc-shaped tube; and in a case that the connecting tube (4) is in the compressed state, the connecting tube (4) is a straight tube.

5. The electronic device according to claim 1, wherein a communication portion between the connecting tube (4) and the first cavity (11) is located in the first main body (1).

6. The electronic device according to claim 1, wherein a communication portion between the connecting tube (4) and the second cavity (21) is located in the second main body (2).

7. The electronic device according to claim 1, further comprising a double-shaft hinge structure (5), wherein
the first main body (1) and the second main body (2) are connected by the double-shaft hinge structure (5).

8. The electronic device according to claim 7, wherein the double-shaft hinge structure (5) comprises:
a first rotating shaft (51), a first connection portion (52), a second rotating shaft (53), a second connection portion (54), and a third connection portion (55), wherein
the first rotating shaft (51) and the second rotating shaft (53) are spaced apart from each other and both are located on a first side of the third connection portion (55);
two opposite ends of the third connection portion (55) are respectively connected to the first rotating shaft (51) and the second rotating shaft (53);
the first connection portion (52) is respectively connected to the first rotating shaft (51) and the first main body (1); and
the second connection portion (54) is respectively connected to the second rotating shaft (53) and the second main body (2).

9. The electronic device according to claim 7, wherein there are two double-shaft hinge structures (5); and
the first main body (1) and the second main body (2) are connected by the two double-shaft hinge structures (5), the two double-shaft hinge structures (5) are spaced apart from each other, and the connecting tube (4) is located between the two double-shaft hinge structures (5).

## Patentansprüche

1. Eine elektronische Vorrichtung, beinhaltend: einen ersten Hauptkörper (1), einen zweiten Hauptkörper (2), ein Lautsprechermodul (3) und einen Verbindungsschlauch (4), wobei
der erste Hauptkörper (1) und der zweite Hauptkörper (2) relativ zueinander in einen zusammengeklappten Zustand oder einen aufgeklappten Zustand drehbar sind;
der erste Hauptkörper (1) mit einem ersten Hohlraum (11) und dem Lautsprechermodul (3) versehen ist und der erste Hohlraum (11) in Kommunikation mit dem Lautsprechermodul (3) steht;
der zweite Hauptkörper (2) mit einem zweiten Hohlraum (21) versehen ist; und
der Verbindungsschlauch (4) an einem Drehgelenk zwischen dem ersten Hauptkörper (1) und dem zweiten Hauptkörper (2) angeordnet ist, zwei Enden des Verbindungsschlauchs (4) in Kommunikation mit dem ersten Hohlraum (11) bzw. dem zweiten Hohlraum (21) stehen, der erste Hohlraum (11), der Verbindungsschlauch (4) und der zweite Hohlraum (21) zusammen einen hinteren Klanghohlraum des Lautsprechermoduls (3) bilden und der Verbindungsschlauch (4) dehnbar ist, wobei in einem Fall, dass der erste Hauptkörper (1) und der zweite Hauptkörper (2) sich relativ zueinander in den zusammengeklappten Zustand drehen, sich der Verbindungsschlauch (4) in einem gedehnten Zustand befindet; und in einem Fall, dass der erste Hauptkörper (1) und der zweite Hauptkörper (2) sich relativ zueinander in den aufgeklappten Zustand drehen, sich der Verbindungsschlauch (4) in einem komprimierten Zustand befindet;
**dadurch gekennzeichnet, dass**
die elektronische Vorrichtung ferner eine Abdeckplatte (6) beinhaltet, wobei die Abdeckplatte (6) an dem Drehgelenk angeordnet ist, die Abdeckplatte (6), der erste Hauptkörper (1) und der zweite Hauptkörper (2) sich zusammenschließen, sodass sie einen dritten Hohlraum bilden, und der Verbindungsschlauch (4) sich in dem dritten Hohlraum befindet;
in einem Fall, dass der erste Hauptkörper (1) und der zweite Hauptkörper (2) sich relativ zueinander in den zusammengeklappten Zustand drehen, mindestens ein Abschnitt der Abdeckplatte (6) frei liegt; und
in einem Fall, dass der erste Hauptkörper (1) und der zweite Hauptkörper (2) sich relativ zueinander in den aufgeklappten Zustand drehen, der erste Hauptkörper (1) und der zweite Hauptkörper (2) gemeinsam die Abdeckplatte (6) abdecken und die Abdeckplatte (6) gänzlich in einem von dem ersten Hauptkörper (1) und dem zweiten Hauptkörper (2) gebildeten Hohlraum verborgen ist.

2. Elektronische Vorrichtung gemäß Anspruch 1, wobei der erste Hauptkörper (1) eine erste Seite nahe dem Drehgelenk beinhaltet und sich der erste Hohlraum (11) auf der ersten Seite befindet; und
der zweite Hauptkörper (2) eine zweite Seite nahe dem Drehgelenk beinhaltet und sich der zweite Hohlraum (21) auf der zweiten Seite befindet.

3. Elektronische Vorrichtung gemäß Anspruch 1, wobei in einem Fall, dass der erste Hauptkörper (1) und der zweite Hauptkörper (2) sich relativ zueinander in den zusammengeklappten Zustand drehen, der erste Hauptkörper (1) eine erste, zu dem zweiten Hauptkörper (2) hin weisende Oberfläche (14) und eine zweite, von dem zweiten Hauptkörper (2) weg weisende Oberfläche (15) beinhaltet, der zweite Hauptkörper (2) eine dritte, zu dem ersten Hauptkörper (1) hin weisende Oberfläche und eine vierte, von dem ersten Hauptkörper (1) weg weisende Oberfläche (24) beinhaltet und die erste Oberfläche (14) der dritten Oberfläche (22) gegenüberliegt; der erste Hohlraum (11) sich zwischen der ersten Oberfläche (14) und der zweiten Oberfläche (15) befindet, der erste Hohlraum (11) nahe der ersten Oberfläche (14) bereitgestellt ist; und
der zweite Hohlraum (21) sich zwischen der dritten Oberfläche (22) und der vierten Oberfläche (24) befindet, der zweite Hohlraum (21) nahe der dritten Oberfläche (22) bereitgestellt ist.

4. Elektronische Vorrichtung gemäß Anspruch 1, wobei in einem Fall, dass sich der Verbindungsschlauch (4) im gedehnten Zustand befindet, der Verbindungsschlauch (4) ein bogenförmiger Schlauch ist; und in einem Fall, dass sich der Verbindungsschlauch (4) im komprimierten Zustand befindet, der Verbindungsschlauch (4) ein gerader Schlauch ist.

5. Elektronische Vorrichtung gemäß Anspruch 1, wobei sich ein Kommunikationsabschnitt zwischen dem Verbindungsschlauch (4) und dem ersten Hohlraum (11) in dem ersten Hauptkörper (1) befindet.

6. Elektronische Vorrichtung gemäß Anspruch 1, wobei sich ein Kommunikationsabschnitt zwischen dem Verbindungsschlauch (4) und dem zweiten Hohlraum (21) in dem zweiten Hauptkörper (2) befindet.

7. Elektronische Vorrichtung gemäß Anspruch 1, ferner beinhaltend eine Doppelschaftscharnierstruktur (5), wobei
der erste Hauptkörper (1) und der zweite Hauptkörper (2) durch die Doppelschaftscharnierstruktur (5) verbunden sind.

8. Elektronische Vorrichtung gemäß Anspruch 7, wobei die Doppelschaftscharnierstruktur (5) Folgendes beinhaltet:
einen ersten drehenden Schaft (51), einen ersten Verbindungsabschnitt (52), einen zweiten drehenden Schaft (53), einen zweiten Verbindungsabschnitt (54) und einen dritten Verbindungsabschnitt (55), wobei
der erste drehende Schaft (51) und der zweite drehende Schaft (53) voneinander beabstandet sind und beide sich auf einer ersten Seite des dritten Verbindungsabschnitts (55) befinden;
zwei gegenüberliegende Enden des dritten Verbindungsabschnitts (55) mit dem ersten drehenden Schaft (51) bzw. dem zweiten drehenden Schaft (53) verbunden sind;
der erste Verbindungsabschnitt (52) jeweils mit dem ersten drehenden Schaft (51) und dem ersten Hauptkörper (1) verbunden ist; und
der zweite Verbindungsabschnitt (54) jeweils mit dem zweiten drehenden Schaft (53) und dem zweiten Hauptkörper (2) verbunden ist.

9. Elektronische Vorrichtung gemäß Anspruch 7, wobei es zwei
Doppelschaftscharnierstrukturen (5) gibt; und
der erste Hauptkörper (1) und der zweite Hauptkörper (2) durch die zwei Doppelschaftscharnierstrukturen (5) verbunden sind, die zwei Doppelschaftscharnierstrukturen (5) voneinander beabstandet sind und der Verbindungsschlauch (4) sich zwischen den zwei Doppelschaftscharnierstrukturen (5) befindet.

## Revendications

1. Un dispositif électronique, comprenant : un premier corps principal (1), un deuxième corps principal (2), un module haut-parleur (3), et un tube de raccordement (4),
le premier corps principal (1) et le deuxième corps principal (2) pouvant tourner l'un par rapport à l'autre jusqu'à un état plié ou un état déplié ;
le premier corps principal (1) étant pourvu d'une première cavité (11) et du module haut-parleur (3), et la première cavité (11) étant en communication avec le module haut-parleur (3) ;
le deuxième corps principal (2) étant pourvu d'une deuxième cavité (21) ; et
le tube de raccordement (4) étant disposé au niveau d'une articulation rotoïde entre le premier corps principal (1) et le deuxième corps principal (2), deux extrémités du tube de raccordement (4) étant en communication respectivement avec la première cavité (11) et la deuxième cavité (21), la première cavité (11), le tube de raccordement (4), et la deuxième cavité (21) formant ensemble une cavité sonore arrière du module haut-parleur (3), et le tube de raccordement (4) étant extensible, dans lequel
dans le cas où le premier corps principal (1) et le deuxième corps principal (2) tournent l'un par rapport à l'autre jusqu'à l'état plié, le tube de raccordement (4) est dans un état étendu ; et dans le cas où le premier corps principal (1) et le deuxième corps principal (2) tournent l'un par rapport à l'autre jusqu'à l'état déplié, le tube de raccordement (4) est dans un état comprimé ;
**caractérisé en ce que**
le dispositif électronique comprend en outre une plaque de recouvrement (6), la plaque de recouvrement (6) étant disposée au niveau de l'articulation rotoïde, la plaque de recouvrement (6), le premier corps principal (1), et le deuxième corps principal (2) étant clos pour former une troisième cavité, et le tube de raccordement (4) étant situé dans la troisième cavité ;
dans le cas où le premier corps principal (1) et le deuxième corps principal (2) tournent l'un par rapport à l'autre jusqu'à l'état plié, au moins une portion de la plaque de recouvrement (6) est apparente ; et
dans le cas où le premier corps principal (1) et le deuxième corps principal (2) tournent l'un par rapport à l'autre jusqu'à l'état déplié, le premier corps principal (1) et le deuxième corps principal (2) recouvrent conjointement la plaque de recouvrement (6), et la plaque de recouvrement (6) est entièrement dissimulée dans une cavité formée par le premier corps principal (1) et le deuxième corps principal (2).

2. Le dispositif électronique selon la revendication 1, dans lequel le premier corps principal (1) comprend un premier côté proche de l'articulation rotoïde, et la première cavité (11) est située du premier côté ; et
le deuxième corps principal (2) comprend un deuxième côté proche de l'articulation rotoïde, et la deuxième cavité (21) est située du deuxième côté.

3. Le dispositif électronique selon la revendication 1, dans lequel dans le cas où le premier corps principal (1) et le deuxième corps principal (2) tournent l'un par rapport à l'autre jusqu'à l'état plié, le premier corps principal (1) comprend une première surface (14) orientée vers le deuxième corps principal (2) et une deuxième surface (15) orientée à l'opposé du deuxième corps principal (2), le deuxième corps principal (2) comprend une troisième surface (22) orientée vers le premier corps principal (1) et une quatrième surface (24) orientée à l'opposé du premier corps principal (1), et la première surface (14) est en regard de la troisième surface (22) ;
la première cavité (11) est située entre la première surface (14) et la deuxième surface (15), la première cavité (11) est ménagée près de la première surface (14) ; et
la deuxième cavité (21) est située entre la troisième surface (22) et la quatrième surface (24), la deuxième cavité (21) est ménagée près de la troisième surface (22).

4. Le dispositif électronique selon la revendication 1, dans lequel dans le cas où le tube de raccordement (4) est dans l'état étendu, le tube de raccordement (4) est un tube arqué ;
et dans le cas où le tube de raccordement (4) est dans l'état comprimé, le tube de raccordement (4) est un tube rectiligne.

5. Le dispositif électronique selon la revendication 1, dans lequel une portion de communication entre le tube de raccordement (4) et la première cavité (11) est située dans le premier corps principal (1).

6. Le dispositif électronique selon la revendication 1, dans lequel une portion de communication entre le tube de raccordement (4) et la deuxième cavité (21) est située dans le deuxième corps principal (2).

7. Le dispositif électronique selon la revendication 1, comprenant en outre une structure de charnière à double axe (5), dans lequel
le premier corps principal (1) et le deuxième corps principal (2) sont raccordés par la structure de charnière à double axe (5).

8. Le dispositif électronique selon la revendication 7, dans lequel la structure de charnière à double axe (5) comprend :
un premier axe de rotation (51), une première portion de raccordement (52), un deuxième axe de rotation (53), une deuxième portion de raccordement (54), et une troisième portion de raccordement (55), dans lequel
le premier axe de rotation (51) et le deuxième axe de rotation (53) sont espacés l'un de l'autre et sont tous les deux situés d'un premier côté de la troisième portion de raccordement (55) ;
deux extrémités opposées de la troisième portion de raccordement (55) sont raccordées respectivement au premier axe de rotation (51) et au deuxième axe de rotation (53) ;
la première portion de raccordement (52) est raccordée respectivement au premier axe de rotation (51) et au premier corps principal (1) ; et
la deuxième portion de raccordement (54) est raccordée respectivement au deuxième axe de rotation (53) et au deuxième corps principal (2).

9. Le dispositif électronique selon la revendication 7, dans lequel il existe deux structures de charnière à double axe (5) ; et
le premier corps principal (1) et le deuxième corps principal (2) sont raccordés par les deux structures de charnière à double axe (5), les deux structures de charnière à double axe (5) sont espacées l'une de l'autre, et le tube de raccordement (4) est situé entre les deux structures de charnière à double axe (5).
